# EUROPEAN PATENT SPECIFICATION

(11) **EP 3 088 241 B1**
(45) Date of publication and mention of the grant of the patent: **09.10.2019**
(21) Application number: 15746993.3
(22) Date of filing: 14.01.2015
(51) Int. Cl.: B60M 3/06, B60L 7/10, B60L 9/04

(54) **REGENERATION INVERTER DEVICE FOR ELECTRIC RAILROAD**
REGENERATIONSWECHSELRICHTERVORRICHTUNG FÜR ELEKTRISCHE EISENBAHN
DISPOSITIF CONVERTISSEUR DE RÉGÉNÉRATION POUR VOIE FERRÉE ÉLECTRIQUE

(30) Priority: 10.02.2014 JP 2014022931
(43) Date of publication of application: 02.11.2016
(73) Proprietor: Meidensha Corporation, Tokyo 141-6029 (JP)
(72) Inventor: MATSUO, Takayuki, Tokyo 141-6029 (JP)
(74) Representative: Manitz Finsterwald Patent- und Rechtsanwaltspartnerschaft mbB
(86) International application number: PCT/JP2015/050763
(87) International publication number: WO 2015/118917

(56) References cited:
- EP-A1- 2 501 017
- JP-A- 2010 215 014
- JP-A- 2013 018 464
- JP-A- 2013 023 074
- JP-A- 2013 095 265
- US-A1- 2011 307 113

## Description

### TECHNICAL FIELD

The present invention relates to a regeneration inverter device for electric railroads, and particularly to a regeneration inverter device for electric railroads provided to prevent regenerative invalidation by connecting a power storage device to electric car lines.

### BACKGROUND TECHNOLOGY

In the feeding system of electric railroads, when a train becomes in a regeneration state and there is no train running with power near the train in the regeneration state, there is a case where regenerated energy is not used and regenerative invalidation occurs. If the regenerative invalidation occurs, the regenerated energy cannot be effectively used. By Patent Document 1, to prevent it, there has been publicly known a technique in which an electric storage device using an electric double layer capacitor (in the following, it is called EDLC) as a storage medium is connected to the feeding system, voltage increased by the breaking of a train is absorbed at the EDLC, and in which energy stored in the EDLC is released when the voltage of the feeding system drops by the start of a train
In addition, by Patent Document 2, there has been publicly known a technique in which a regeneration inverter is connected between a distribution line to supply power to loads such as lighting of station buildings and an electric car line, and in which energy stored in an electric storage device is supplied to general alternating current loads such as the lighting of the station buildings through the regeneration inverter.
Patent Document 1: Japanese Patent Application Publication 2000-233669
Patent Document 2: Japanese Patent Application Publication 2013-95265

EP2501017A1 relates to a feed system that feeds power to a mobile unit. Power of an alternating current electric power system is supplied to a rectifier via a power receiving breaker, and the power is then either forwarded to the mobile unit, or forwarded to charge a storage medium. In the charging mode, a control unit toggles on/off switching switches such that a rectifier, a current-limiting reactor, and a storage medium are connected in series. It follows that the storage medium is charged with power provided by the alternating current electric power system.

JP2013018464A relates to a feeding system for supplying DC electric power to overhead wires of an electric railway. The feeding system includes an electric storage device, wherein a current control circuit comprising a diode and a switch connected in series with the electric storage device. For example, the anode of the diode can be connected to the negative potential side of the power storage device, whereas the cathode is connected to a return line. Then, if the switch is closed, current is allowed to flow regardless of the presence of the diode. On the other hand, if the switch is open, the current flows only in the charging direction of the power storage device, and the current in the discharging direction is interrupted. Accordingly, when the electric storage device undergoes an over-discharge, the switch can be opened to prevent the respective current flow. Similarly, by reversing the diode, current flows via the diode only in the discharging direction from the storage device to the electric railway. Thereby, problems caused by fluctuations in the voltage of the feeding wire can be diminished or avoided.

US2011307113A1 relates to a rail vehicle being supplied with electric current from a plurality of power sources over a conductive pathway extending along the respective track. For this purpose, switch controllers alternate switches between open and closed positions to prevent and allow current to flow from one or more power sources to the conductive pathways. Similarly, regenerated electric current created by one or more rail vehicles can be transmitted on the conductive pathway to the switch controller. In this case, the switch controller can open and/or close on/off switches to convey the regenerated current from the conductive pathway to an energy store, or alternatively, to a utility power source.

### DISCLOSURE OF THE INVENTION

There is a characteristic that the regeneration power of trains is generated with a high power in a short period of time (several MW-several tens of seconds), and, in the present power storage device, it therefore has EDLC capacity which is capable of storing an energy of approximately 20 MW · s at one time regeneration absorption. If the stored energy is not released (reuse) before the next regeneration power is generated, a regeneration absorption function does not work. That is, the regenerated power is necessary to be supplied to a train running with power before the next regeneration power is generated. However, in a case where there is no train running with power near a train in a regeneration state, regenerative invalidation of the train in the regeneration state occurs because the regeneration absorption function does not work.

On the other hand, the regeneration inverter for electric railroads can convert the stored energy and directly supply it to an alternating current power source system, and problems therefore do not occur even if the regeneration is repeatedly generated. However, there are cases where power companies do not like to receive revers power transmission and do not buy the regenerated power, consumption of the regenerated power must rely on general alternating current loads such as lighting and power supplies of stations and substations, and can only consume a fraction of a regenerated power of several MW generated by a train.

An object of the present invention is to provide a regeneration inverter device for electric railroads which is capable of effectively using energy absorbed in the EDLC.

According to the present invention, in a regeneration inverter device for an electric railroad in which the direct current side of a regeneration inverter is connected to the electric car line of the electric railroad, an alternating current load is connected to the alternating current side of the regeneration inverter through a coupled transformer, a power storage device is connected to the direct current side of the regeneration inverter, and in which regenerated power generated by a train is stored in the power storage device, wherein double-throw switches are connected respectively to a positive and a negative electrode on the direct current side of the regeneration inverter to switch a connection between the electric car line and the storage medium of the power storage device, the double-throw switch connected to the positive electrode side of the regeneration inverter is switched to a positive electrode side of the electric car line side when charging the storage medium and to one end side of the storage medium side when discharging, the double-throw switch connected to the negative electrode side of the regeneration inverter is switched to the one end of the storage medium through a reactor when charging, and to the other end of the storage medium and the negative electrode side of the electric car line when discharging , the regeneration inverter is controlled to perform chopping operation when charging and to perform inverter operation by PWM when discharging, when the regenerated power generated on the electric car line is charged, there is formed a charging route from the positive electrode side of the electric car line to the storage medium through the double-throw switch connected to the positive electrode side of the regeneration inverter, a switching element of the regeneration inverter, the double-throw switch connected to the negative electrode side of the regeneration inverter and the reactor, and in that when discharging, there is formed a discharging route from the storage medium to the alternating current load through the double-throw switch connected to the positive electrode side of the regeneration inverter, the switching element of the regeneration inverter and the coupled transformer.

According to an embodiment of the present invention, the regeneration inverter device for the electric railroad is characterized in that the regeneration inverter and the coupled transformer are provided with a first switch therebetween, a second switch is connected, in series, to a smoothing capacitor connected to the regeneration inverter in parallel, and the first and the second switches are controlled to be turned on when the regenerated power is discharged from the storage medium.

According to another embodiment of the present invention, the regeneration inverter device for the electric railroad is characterized in that the charging of the storage medium is performed with a high current in a short period of time, as compared with when discharging, and the discharging from the storage medium is performed with a low power in a relatively long period of time, as compare with when charging.

According to further another embodiment of the present invention, the regeneration inverter device for the electric railroad is characterized in that when the feeding voltage of the electric car line exceeds a set charging start setting voltage, the regeneration inverter starts charging the storage medium with a DC-DC charging mode, when the feeding voltage is below a set charging end setting voltage, charging operation is finished and the regeneration inverter is shifted to a DC-AC discharging mode, in discharging operation at the time of the discharging mode, the discharging is continued until the voltage of the storage medium becomes a discharging end voltage even if the feeding voltage exceeds the charging start setting voltage, and the regeneration inverter is shifted to the DC-DC charging mode after finishing the discharging operation.

According to another embodiment of the present invention, the regeneration inverter device for the electric railroad is characterized in that when the feeding voltage of the electric car line exceeds the set charging start setting voltage, the regeneration inverter starts charging the storage medium with the DC-DC charging mode, when the feeding voltage is below the set charging end setting voltage, the charging operation is finished and the regeneration inverter is shifted to the DC-AC discharging mode, and when the feeding voltage exceeds the charging start setting voltage during the discharging operation in the charging mode, the regeneration inverter is shifted to the DC-DC charging mode and controls charging current with the charging operation.

### BRIEF DESCRIPTION OF THE DRAWINGS

FIG. 1 is a block diagram of a regeneration inverter device showing an embodiment of the present invention.
FIG. 2 is a schematic explanation drawing at the time when regeneration is generated by a train.
FIG. 3 is a schematic explanation drawing at the time when the regeneration generated by the train is finished.

### THE BEST MODE FOR IMPLEMENTING THE INVENTION

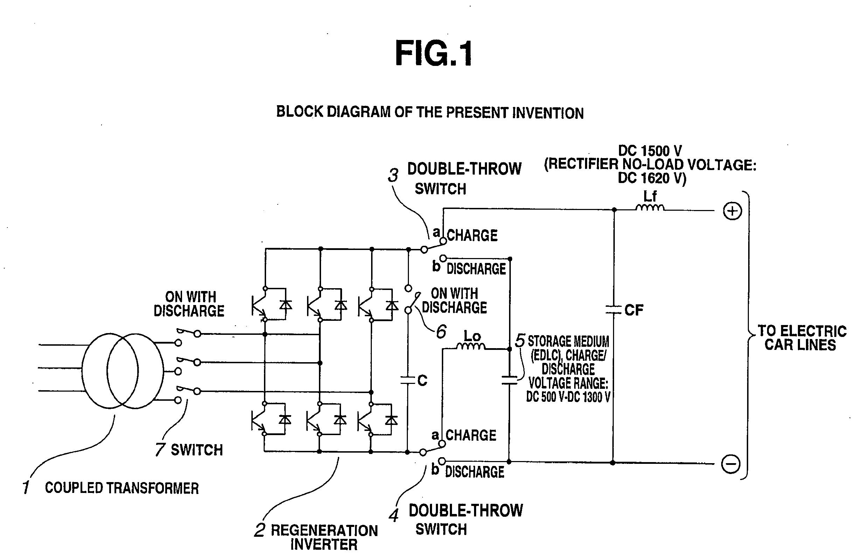

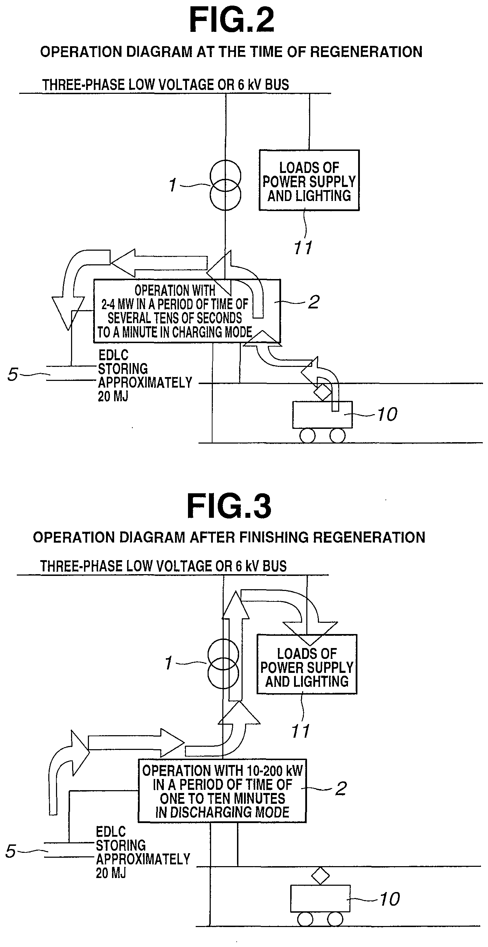

FIG. 1 shows a block diagram of a regeneration inverter device of the present invention. There is 1 that is a coupled transformer and that is provided between a bus (the after-mentioned three-phase low voltage or 6 kV bus of FIG. 2) in which general alternating current loads used in a yard, such as a station building, are connected and a regeneration inverter 2. The direct current side of the regeneration inverter 2 is connected to an electric car line and is formed of a bidirectional switching element, such as an IGBT, and it becomes possible to control the conversion between a DC-DC charging mode and a DC-AC discharging mode. That is, in the DC-DC charging mode, all of the switching elements or an optional arm in which IGBTs are connected in series performs chopping operation at the same time. At the time of this charging, all three-phase switching elements perform the chopping operation at the same time, and thereby the charging with a high current becomes possible. In the DC-AC discharging mode, inverter operation by PWM is performed. In addition, a direct current from a direct current substation, which is not shown in the drawings, is supplied to a train through the electric car line.

There are 3 and 4 that are a double-throw switch and that are provided between the regeneration inverter 2 and the electric car line. At the time of the charging mode, each of the double-throw switches 3 and 4 is connected to an "a" side contact, and, at the time of the discharging mode, each of them is connected to a "b" side contact. There is 5 that is a power storage device using an EDLC as a storage medium, and its negative electrode side is connected between the "b" side contact of the double-throw switch 4 and the negative electrode side of the electric car line. In addition, the positive electrode side of the power storage device is connected to the "b" side contact of the double-throw switch 3 and to the other end of a reactor L₀ for the chopping operation in which one end of the reactor L₀ is connected to the "a" side contact of the double-throw switch 4.

There is 6 that is a switch, and that is connected to a smoothing capacitor C in series and to the regeneration inverter 2 in parallel. There are 7 that are a switch, and each of this switch 7 and the switch 6 is turned off in the charging mode. In the discharging mode, each of them is controlled to be turned on. In addition, each of the switches 3, 4, 6 and 7 can be a power semiconductor element or a mechanical switch. In the charging and the discharging modes, they are synchronized and controlled to be turned on/off.

Operation of the regeneration inverter device of the present invention configured as the above is explained. FIG. 2 and FIG. 3 show a schematic operation mode. FIG. 2 is a schematic system diagram at the time when a train is regenerating power. When the regeneration inverter device is the DC-DC charging mode, each of the double-throw switches 3 and 4 is connected to the "a" side contact. Regenerated power generated by a train 10 flows a route of the "a" side contact of the double-throw switch 3 → the IGBT of the regeneration inverter 2 → the "a" side contact of the double-throw switch 4 → the reactor L₀ → the power storage device 5, and an energy of approximately 20 MJ is stored in the EDLC of the power storage device 5. At that time, in the EDLC, a storage process of the regenerated power is performed with a high current that is a power of 2 to 4 MW in a short period of time of approximately several tens of seconds to a minute. After finishing the regeneration, the DC-DC charging mode of the regeneration inverter 2 is switched to the DC-AC discharging mode.

FIG. 3 is a schematic system diagram after finishing the regeneration by the train, and the regeneration inverter device is the DC-AC discharging mode. At this time, each of the double-throw switches 3 and 4 is switched to the "b" side contact, and, at the same time of this, the switches 6 and 7 are also connected. The energy stored in the EDLC of the power storage device 5 is supplied through a route of the EDLC → the "b" side contact of the double-throw switch 3 → the regeneration inverter 2 → the switch 7 → the coupled transformer 1 → a general alternating current load 11 connected to the bus. In the regeneration inverter device in this discharging mode, a relatively low power of 10 to 200 kW is discharged in a relatively long period of time of one to ten minutes, and it is prepared for the generation of the next regeneration power. Since the alternating current load 11 of the substation and the station building is relatively stable, the energy generated by the regeneration and stored in the EDLC can be consumed as planned, and it therefore becomes possible to absorb the regeneration power one after another without relying on a train running with power.

In the following, a specific switching control is explained. The feeding voltage of the electric car line from the direct current substation is set to DC 1500 V (rectifier no-load voltage: DC 1620 V), charging start setting voltage is set to DC 1690 V, and charging end setting voltage is set to DC 1620 V. In addition, the use voltage range of the EDLC of the power storage device 5 is temporarily set from DC 500 V (discharging end voltage) to DC 1300 V (full charging voltage), and the EDLC stands by at 500 V all the time.

### (1) Use in a discharging priority mode

When the feeding voltage exceeds the charging start setting voltage that is DC 1690 V, the regeneration inverter device starts charging operation with the DC-DC charging mode, and the chopping operation of the IGBT of the regeneration inverter 2 is performed so that the feeding voltage does not exceed the charging start setting voltage that is DC 1690 V, thereby controlling charging current to the EDLC of the power storage device 5. When the feeding voltage is below the charging end setting voltage that is DC1620 V, the charging operation is finished. However, when the voltage of the EDLC becomes the full charging voltage that is DC 1300 V during the charging, at that time, the charging operation is finished.

After finishing the charging operation, the device is immediately shifted to the DC-AC mode. After rearranging the configuration of the regeneration inverter 2 to a configuration for an inverter, the energy stored in the EDLC of the power storage device 5 is converted to a three-phase alternating current, and it is transmitted to a low voltage bus in the yard through the switch 7 and the coupled transformer 1, and is consumed by the alternating current load 11 of an alternating current.

The discharging operation is continued until the EDLC voltage becomes the discharging end voltage that is DC 500 V, and when it becomes DC 500 V, the discharging operation is finished. Even if the feeding voltage exceeds the charging start setting voltage that is DC 1690 V during the discharging operation, the discharging is continued and the regeneration inverter 2 is not shifted to the charging operation. After finishing the discharging operation, the regeneration inverter device is returned to the DC-DC charging mode and becomes in a standby state for the next charging operation. That is, control in a discharging priority mode is performed.

### (2) Use in a charging priority mode

When the feeding voltage exceeds the charging start setting voltage that is DC 1690 V, the regeneration inverter device starts the charging operation with the DC-DC charging mode, and the chopping operation of the IGBT of the regeneration inverter 2 is performed so that the feeding voltage does not exceed the charging start setting voltage that is DC1690 V, thereby controlling the charging current to the EDLC. When the feeding voltage is below the charging end setting voltage that is DC 1620 V, the charging operation is finished. However, when the EDLC voltage becomes the full charging voltage that is DC 1300 V during the charging, at that time, the charging operation is finished.

After finishing the charging operation, the device is immediately shifted to the DC-AC discharging mode. After rearranging the configuration of the regeneration inverter 2 to the configuration for the inverter, the energy stored in the EDLC is converted to the three-phase alternating current, and it is transmitted to the low voltage bus in the yard through the coupled transformer 1 and is consumed by the alternating current load 11 of the alternating current.

The discharging operation is continued until the EDLC voltage becomes the discharging end voltage that is DC 500 V, and when it becomes DC 500 V, the discharging operation is finished. After finishing the discharging operation, the regeneration inverter device is returned to the DC-DC charging mode and becomes in the standby state for the next charging operation. However, when the feeding voltage exceeds the charging start setting voltage that is DC 1690 V during the discharging operation, the configuration of the regeneration inverter 2 is immediately rearranged to a configuration for a DC-DC converter, the charging operation is started, and the regenerated power is charged to the EDLC. That is, control in a charging priority mode is performed.

As the above, according to the present invention, even if a control system of the control in the discharging priority mode or in the charging priority mode is performed, the regeneration inverter performs both of the DC-DC charging and the DC-AC discharging, and thereby a switching element, such as a boosting chopper, provided in the power storage device of Patent Document 2 becomes unnecessary. With this, the size of the device is reduced and cost reduction becomes possible. In addition, even if there is no train running with power near a train regenerating power, the regenerated power can be repeatedly absorbed, and it is therefore possible to prevent regenerative invalidation. Furthermore, the energy absorbed at the EDLC can be reused immediately, and thereby more efficient energy saving can be possible.

## Claims

1. A regeneration inverter device for an electric railroad in which a direct current side of a regeneration inverter (2) is connected to an electric car line of the electric railroad, an alternating current load (11) is connected to an alternating current side of the regeneration inverter (2), and a power storage device (5) is connected to the direct current side of the regeneration inverter (2),
wherein double-throw switches (3, 4) are connected respectively to a positive and a negative electrode on the direct current side of the regeneration inverter (2) to switch a connection between the electric car line and a storage medium of the power storage device (5), and
wherein when discharging, the regeneration inverter (2) is controlled to perform inverter operation by PWM and there is formed a discharging route from the storage medium to the alternating current load (11), **characterized in that**:
regenerated power generated by a train (10) is stored in the power storage device (5), wherein the double-throw switch (3) connected to the positive electrode side of the regeneration inverter (2) is switched to a positive electrode side of the electric car line when charging the storage medium and to one end side of the storage medium when discharging,
wherein the double-throw switch (4) connected to the negative electrode side of the regeneration inverter (2) is switched to the one end of the storage medium through a reactor (L_{O}) when charging, and to the other end of the storage medium and the negative electrode side of the electric car line when discharging,
wherein the regeneration inverter (2) is controlled to perform chopping operation when charging,
wherein when the regenerated power generated on the electric car line is charged, there is formed a charging route from the positive electrode side of the electric car line to the storage medium through the double-throw switch (3) connected to the positive electrode side of the regeneration inverter (2), a switching element of the regeneration inverter (2), the double-throw switch (4) connected to the negative electrode side of the regeneration inverter (2) and the reactor (L_{O}), and
wherein when discharging, the discharging route is formed from the storage medium to the alternating current load (11) through the double-throw switch (3) connected to the positive electrode side of the regeneration inverter (2), the switching element of the regeneration inverter (2) and a coupled transformer (1).

2. The regeneration inverter device for the electric railroad according to claim 1, wherein the regeneration inverter (2) and the coupled transformer (1) are provided with a first switch (7) therebetween, a second switch (6) is connected, in series, to a smoothing capacitor (C) connected to the regeneration inverter (2) in parallel, and the first and the second switches (6, 7) are controlled to be turned on when the regenerated power is discharged from the storage medium.

3. The regeneration inverter device for the electric railroad according to claim 1 or 2, wherein the charging of the storage medium is performed with a high current in a short period of time, as compared with when discharging, and the discharging from the storage medium is performed with a low power in a relatively long period of time, as compare with when charging.

4. The regeneration inverter device for the electric railroad according to any one of claims 1 to 3, wherein when a feeding voltage of the electric car line exceeds a set charging start setting voltage, the regeneration inverter (2) starts charging the storage medium with a DC-DC charging mode,
wherein when the feeding voltage is below a set charging end setting voltage, charging operation is finished and the regeneration inverter (2) is shifted to a DC-AC discharging mode,
wherein, in discharging operation at the time of the discharging mode, the discharging is continued until a voltage of the storage medium becomes a discharging end voltage even if the feeding voltage exceeds the charging start setting voltage, and
wherein the regeneration inverter (2) is shifted to the DC-DC charging mode after finishing the discharging operation.

5. The regeneration inverter device for the electric railroad according to any one of claims 1 to 3, wherein when a feeding voltage of the electric car line exceeds a set charging start setting voltage, the regeneration inverter (2) starts charging the storage medium with a DC-DC charging mode,
wherein when the feeding voltage is below a set charging end setting voltage, charging operation is finished and the regeneration inverter (2) is shifted to a DC-AC discharging mode, and
wherein when the feeding voltage exceeds the charging start setting voltage during discharging operation in the charging mode, the regeneration inverter (2) is shifted to the DC-DC charging mode and controls charging current with the charging operation.

## Patentansprüche

1. Regenerationswechselrichtervorrichtung für eine elektrische Eisenbahn, bei der eine Gleichstromseite eines Regenerationswechselrichters (2) mit einer Elektrowagenleitung der elektrischen Eisenbahn verbunden ist, eine Wechselstromlast (11) mit einer Wechselstromseite des Regenerationswechselrichters (2) verbunden ist und eine Energiespeichervorrichtung (5) mit der Gleichstromseite des Regenerationswechselrichters (2) verbunden ist,
wobei Wechselschalter (3, 4) jeweils mit einer positiven und einer negativen Elektrode auf der Gleichstromseite des Regenerationswechselrichters (2) verbunden sind, um eine Verbindung zwischen der Elektrowagenleitung und einem Speichermedium der Energiespeichervorrichtung (5) zu schalten, und
wobei der Regenerationswechselrichter (2) beim Entladen gesteuert wird, um einen Wechselrichterbetrieb durch PWM durchzuführen, und ein Entladungsweg von dem Speichermedium zu der Wechselstromlast (11) gebildet wird,
**dadurch gekennzeichnet, dass**:
regenerierte Energie, die von einem Zug (10) erzeugt wird, in der Energiespeichervorrichtung (5) gespeichert wird, wobei der mit der positiven Elektrodenseite des Regenerationswechselrichters (2) verbundene Wechselschalter (3) beim Laden des Speichermediums auf eine positive Elektrodenseite der Elektrowagenleitung und beim Entladen auf eine Endseite des Speichermediums geschaltet wird,
wobei der mit der negativen Elektrodenseite des Regenerationswechselrichters (2) verbundene Wechselschalter (4) beim Laden auf das eine Ende des Speichermediums durch einen Reaktor (L_{O}) und beim Entladen auf das andere Ende des Speichermediums und die negative Elektrodenseite der Elektrowagenleitung geschaltet wird,
wobei der Regenerationswechselrichter (2) gesteuert wird, um beim Laden eine Zerhackeroperation durchzuführen,
wobei, wenn die auf der Elektrowagenleitung erzeugte regenerierte Leistung geladen wird, ein Ladeweg von der positiven Elektrodenseite der Elektrowagenleitung zu dem Speichermedium durch den mit der positiven Elektrodenseite des Regenerationswechselrichters (2) verbundenen Wechselschalter (3), ein Schaltelement des Regenerationswechselrichters (2), den mit der negativen Elektrodenseite des Regenerationswechselrichters (2) verbundenen Wechselschalter (4) und den Reaktor (L_{O}) gebildet wird, und
wobei beim Entladen der Entladungsweg von dem Speichermedium zu der Wechselstromlast (11) durch den mit der positiven Elektrodenseite des Regenerationswechselrichters (2) verbundenen Wechselschalter (3), das Schaltelement des Regenerationswechselrichters (2) und einen gekoppelten Transformator (1) gebildet wird.

2. Regenerationswechselrichtervorrichtung für die elektrische Eisenbahn nach Anspruch 1, wobei der Regenerationswechselrichter (2) und der gekoppelte Transformator (1) mit einem ersten Schalter (7) dazwischen versehen sind, ein zweiter Schalter (6) in Reihe mit einem Glättungskondensator (C) verbunden ist, der zu dem Regenerationswechselrichter (2) parallel geschaltet ist, und der erste und der zweite Schalter (6, 7) so gesteuert werden, dass sie eingeschaltet werden, wenn die regenerierte Energie aus dem Speichermedium entladen wird.

3. Regenerationswechselrichtervorrichtung für die elektrische Eisenbahn nach Anspruch 1 oder 2, wobei das Laden des Speichermediums mit einem hohen Strom in einem verglichen mit dem Entladen kurzen Zeitraum durchgeführt wird, und das Entladen aus dem Speichermedium mit einer geringen Leistung in einem verglichen mit dem Laden relativ langen Zeitraum durchgeführt wird.

4. Regenerationswechselrichtervorrichtung für die elektrische Eisenbahn nach einem der Ansprüche 1 bis 3, wobei, wenn eine Speisespannung der Elektrowagenleitung eine eingestellte Ladestarteinstellspannung überschreitet, der Regenerationswechselrichter (2) mit dem Aufladen des Speichermediums mit einem DC-DC-Lademodus beginnt,
wobei, wenn die Speisespannung unter einer eingestellten Ladeendeeinstellspannung liegt, der Ladevorgang beendet wird und der Regenerationswechselrichter (2) in einen DC-AC-Entladungsmodus umgeschaltet wird,
wobei im Entladebetrieb zum Zeitpunkt des Entlademodus das Entladen fortgesetzt wird, bis eine Spannung des Speichermediums zu einer Entladeendespannung wird, selbst wenn die Speisespannung die eingestellte Ladestarteinstellspannung überschreitet, und
wobei der Regenerationswechselrichter (2) nach Beendigung des Entladevorgangs in den DC-DC-Lademodus umgeschaltet wird.

5. Regenerationswechselrichtervorrichtung für die elektrische Eisenbahn nach einem der Ansprüche 1 bis 3, wobei, wenn eine Speisespannung der Elektrowagenleitung eine eingestellte Ladestarteinstellspannung überschreitet, der Regenerationswechselrichter (2) mit dem Laden des Speichermediums mit einem DC-DC-Lademodus beginnt,
wobei, wenn die Speisespannung unter einer eingestellten Ladeendeeinstellspannung liegt, der Ladevorgang beendet wird und der Regenerationswechselrichter (2) in einen DC-AC-Entlademodus umgeschaltet wird, und
wobei, wenn die Speisespannung die Ladestarteinstellspannung während des Entladevorgangs im Lademodus überschreitet, der Regenerationswechselrichter (2) in den DC-DC-Lademodus umgeschaltet wird und den Ladestrom mit dem Ladevorgang steuert.

## Revendications

1. Dispositif onduleur de régénération pour une voie ferrée électrique, dans lequel un côté courant continu d'un onduleur de régénération (2) est connecté à une ligne de voiture électrique de la voie ferrée électrique, une charge de courant alternatif (11) est connectée à un côté courant alternatif de l'onduleur de régénération (2) et un dispositif de stockage de puissance (5) est connecté au côté courant continu de l'onduleur de régénération (2),
dans lequel des commutateurs bidirectionnels (3, 4) sont connectés respectivement à une électrode positive et à une électrode négative du côté courant continu de l'onduleur de régénération (2) pour commuter une connexion entre la ligne de voiture électrique et un moyen de stockage du dispositif de stockage de puissance (5) et
dans lequel, lors de la décharge, l'onduleur de régénération (2) est commandé par modulation de largeur d'impulsion (PWM) pour effectuer une opération d'onduleur et il est formé un trajet de décharge allant du moyen de stockage à la charge de courant alternatif (11),
**caractérisé en ce que**
la puissance régénérée générée par un train (10) est stockée dans le dispositif de stockage de puissance (5), dans lequel le commutateur bidirectionnel (3) connecté au côté électrode positive de l'onduleur de régénération (2) est commuté sur un côté électrode positive de la ligne de voiture électrique lors de la charge du moyen de stockage et sur un côté extrémité du moyen de stockage lors de la décharge,
dans lequel le commutateur bidirectionnel (4) connecté au côté électrode négative de l'onduleur de régénération (2) est commuté sur une extrémité du moyen de stockage à travers une inductance (L_{O}) lors de la charge et sur l'autre extrémité du moyen de stockage et le côté électrode négative de la ligne de voiture électrique lors de la décharge,
dans lequel l'onduleur de régénération (2) est commandé pour effectuer une opération de découpage lors de la charge,
dans lequel, lorsque la puissance régénérée générée sur la ligne de voiture électrique est chargée, il est formé un trajet de charge allant du côté électrode positive de la ligne de voiture électrique au moyen de stockage via le commutateur bidirectionnel (3) connecté au côté électrode positive de l'onduleur de régénération (2), un élément de commutation de l'onduleur de régénération (2), le commutateur bidirectionnel (4) connecté au côté électrode négative de l'onduleur de régénération (2) et l'inductance (L_{O}), et
dans lequel, lors de la décharge, le trajet de décharge est formé du moyen de stockage à la charge de courant alternatif (11) via le commutateur bidirectionnel (3) connecté au côté électrode positive de l'onduleur de régénération (2), l'élément de commutation de l'onduleur de régénération (2) et un transformateur couplé (1).

2. Dispositif onduleur de régénération pour la voie ferrée électrique selon la revendication 1, dans lequel l'onduleur de régénération (2) et le transformateur couplé (1) sont pourvus d'un premier commutateur (7) entre eux, un deuxième commutateur (6) est connecté en série à un condensateur de lissage (C) connecté en parallèle à l'onduleur de régénération (2) et les premier et deuxième commutateurs (6, 7) sont commandés pour être actionnés lorsque la puissance régénérée est déchargée à partir du moyen de stockage.

3. Dispositif onduleur de régénération pour la voie ferrée électrique selon la revendication 1 ou 2, dans lequel la charge du moyen de stockage est effectuée avec un courant élevé dans un laps de temps court par rapport à la décharge et la décharge à partir du moyen de stockage est effectuée avec une faible puissance dans un laps de temps relativement long par rapport à la charge.

4. Dispositif onduleur de régénération pour la voie ferrée électrique selon l'une quelconque des revendications 1 à 3, dans lequel, lorsqu'une tension d'alimentation de la ligne de voiture électrique dépasse une tension de réglage de début de charge réglée, l'onduleur de régénération (2) commence à charger le moyen de stockage avec un mode de charge continu-continu,
dans lequel, lorsque la tension d'alimentation est inférieure à une tension de réglage de fin de charge réglée, l'opération de charge est terminée et l'onduleur de régénération (2) est passé dans un mode de décharge continu-alternatif,
dans lequel, en opération de décharge au moment du mode de décharge, la décharge se poursuit jusqu'à ce qu'une tension du moyen de stockage devienne une tension de fin de décharge même si la tension d'alimentation dépasse la tension de réglage de début de charge et
dans lequel l'onduleur de régénération (2) est passé dans le mode de charge continu-continu après avoir terminé l'opération de décharge.

5. Dispositif onduleur de régénération pour la voie ferrée électrique selon l'une quelconque des revendications 1 à 3, dans lequel, lorsqu'une tension d'alimentation de la ligne de voiture électrique dépasse une tension de réglage de début de charge réglée, l'onduleur de régénération (2) commence à charger le moyen de stockage avec un mode de charge continu-continu,
dans lequel, lorsque la tension d'alimentation est inférieure à une tension de réglage de fin de charge réglée, l'opération de charge est terminée et l'onduleur de régénération (2) est passé dans un mode de décharge continu-alternatif et
dans lequel, lorsque la tension d'alimentation dépasse la tension de réglage de début de charge pendant l'opération de décharge dans le mode de charge, l'onduleur de régénération (2) est passé dans le mode de charge continu-continu et commande le courant de charge avec l'opération de charge.
